# EUROPÄISCHE PATENTSCHRIFT

(11) **EP 4 037 862 B1**
(45) Veröffentlichungstag und Bekanntmachung des Hinweises auf die Patenterteilung: **08.04.2026**
(21) Anmeldenummer: 20785926.5
(22) Anmeldetag: 25.09.2020
(51) Int. Cl.: B23K 26/00, B23K 37/02, B23Q 17/24, G05B 19/401

(54) **VERFAHREN ZUM BELADEN EINER TAFELABLAGEVORRICHTUNG EINER FLACHBETTWERKZEUGMASCHINE UND FLACHBETTWERKZEUGMASCHINE**
METHOD FOR LOADING A SHEET PLACEMENT DEVICE OF A FLAT BED MACHINE TOOL AND FLAT BED MACHINE TOOL
PROCÉDÉ DE CHARGEMENT D'UN DISPOSITIF DE PLACEMENT DE FEUILLE D'UNE MACHINE-OUTIL À LIT PLAT, ET MACHINE-OUTIL À PLATE-FORME

(30) Priorität: 30.09.2019 DE 102019126403
(43) Veröffentlichungstag der Anmeldung: 10.08.2022
(73) Patentinhaber: TRUMPF Werkzeugmaschinen SE + Co. KG, 71254 Ditzingen (DE)
(72) Erfinder: OTTNAD, Jens, 76199 Karlsruhe (DE); PÖNITZ, Willi, 71229 Leonberg (DE); DEISS, Magnus, 70372 Stuttgart (DE)
(74) Vertreter: Trumpf Patentabteilung
(86) Internationale Anmeldenummer: PCT/EP2020/076955
(87) Internationale Veröffentlichungsnummer: WO 2021/063837

(56) Entgegenhaltungen:
- EP-A1- 0 546 364
- EP-A2- 1 222 975
- WO-A1-2007/134631
- WO-A1-2017/190258
- WO-A2-2016/005159
- DE-A1- 102009 056 013
- US-B1- 6 167 607

## Beschreibung

Die vorliegende Erfindung betrifft ein Verfahren zum Beladen einer Tafelablagevorrichtung einer Flachbettwerkzeugmaschine mit einer Materialtafel. Ferner betrifft die Erfindung eine Flachbettwerkzeugmaschine.

Flachbettwerkzeugmaschinen wie Laserschneidmaschinen werden zur Bearbeitung von Materialtafeln wie Rohblechtafeln/Blechen eingesetzt. Hierzu wird eine zu bearbeitende Materialtafel üblicherweise auf eine Palette abgelegt und mit dieser in einen Bearbeitungsraum der Flachbettwerkzeugmaschine eingebracht. Üblicherweise erfolgt das Beladen bei kleinen Materialtafel manuell, d.h. ohne Hilfsmittel, oder bei größeren Formaten von Materialtafeln mit Hilfe einer Hebevorrichtung. In beiden Fällen können Anschläge auf der Palette vorgesehen werden, um das Beladen der Palette an einer festen Position zu gewährleisten.

Ein Beispiel für eine Hebevorrichtung von plattenförmigen metallischen Werkstücken ist aus der DE 10 2017 223 574 A1 insbesondere zur Verwendung mit einer Flachbettwerkzeugmaschine bekannt.

Die für das Beladen relevante Information wie Materialtafeltyp (gegeben z.B. durch die Tafelmaße und Materialart) und Tafelausrichtung hat der Bediener den Auftrags- und Produktionspapieren zu entnehmen. Der Bearbeitungsvorgang ist auf eine korrekte Belegung mit auszuschneidenden Werkstücken ausgerichtet. Dies setzt insbesondere die korrekte Ausrichtung der Materialtafel an den Anschlägen zumindest innerhalb vorgegebener Toleranzen voraus.

Es ist alternativ aus der JP 2013-039591 A bekannt, in einer Schneidregion eine Kamera zu verwenden, um ein zu schneidendes Material mithilfe von Basispunkten zu erkennen, wobei die Basispunkte in der Schneidregion vorgesehen sind und so in einem aufgenommenen Bild der Kamera erkannt werden können.

Aus der WO 2017/190258 A1 ist eine Zuführung einer Blechtafel zu einer Stanzpresse bekannt, wobei die Ausrichtung der Blechtafel in Zuführrichtung mittels Anschlägen eingestellt wird und die Ausrichtung in die zur Zuführrichtung orthogonale zweite Richtung so erfolgt, dass die Lage der Blechtafel in der zweiten Richtung durch einen Sensor und eine Steuereinrichtung ermittelt und die Abweichung der Blechtafel von der vorbestimmten Ausrichtlage in der zweiten Richtung von der Steuereinrichtung ermittelt wird und die Abweichung mit einer Greifanordnung kompensiert wird.

Aus der EP 1 222 975 A2 ist ein Positioniersystem für Bleche bei Abkantpressen bekannt, wobei Sensoren die aktuelle Position des Blechs erfassen, und die Position korrigiert wird bis die aktuelle Position der vorprogrammierten gewünschten Position entspricht.

Aus der EP 0 546 364 A1 ist eine Vorrichtung zum Einrichten von flächigen Elementen unter Bezug auf eine Stanzform bekannt.

Aus der US 6 167 607 B1 ist eine Vorrichtung zur bildbasierten Montage bekannt.

Aus der WO 2007/134631 A1 ist ein Verfahren zur Optimierung einer Anordnuing von Tragpunktspitzen bekannt.

Einem Aspekt dieser Offenbarung liegt die Aufgabe zugrunde, einen Beladevorgang von Flachbettwerkzeugmaschinen zu vereinfachen und eine flexible Einbindung des Beladevorgangs in den Fertigungsprozess zu ermöglichen. Eine weitere Aufgabe liegt darin, die Verwendung einer Hebevorrichtung beim Beladevorgang zu optimieren, um einen Bediener einer Flachbettwerkzeugmaschine beim Beladen und auch bei der Vereinzelung von bearbeiteten Teilen zu unterstützen.

Zumindest eine dieser Aufgaben wird gelöst durch ein Verfahren zum Beladen einer Tafelablagevorrichtung nach Anspruch 1 und durch eine Flachbettwerkzeugmaschine nach Anspruch 11. Weiterbildungen sind in den Unteransprüchen angegeben. Die Erfindung wird durch die Ansprüche definiert.

Ein Aspekt der Offenbarung betrifft ein Verfahren zum Beladen einer Tafelablagevorrichtung einer Flachbettwerkzeugmaschine mit einer Materialtafel, wobei die Materialtafel der Bearbeitung mit der Flachbettwerkzeugmaschine ausgehend von einer der Bearbeitung in einem Maschinenkoordinatensystem zugeordneten Soll-Lage zuzuführen ist und die Flachbettwerkzeugmaschine ein Kamerasystem mit mindestens einer Kamera umfasst. Das Kamerasystem ist zum Erzeugen von Bildaufnahmen der Tafelablagevorrichtung ausgebildet, die zu dem Maschinenkoordinatensystem der Flachbettwerkzeugmaschine räumlich kalibriert sind. Das Verfahren kann die folgenden Schritte umfassen:
Erzeugen einer Bildaufnahme der Materialtafel im Bereich der Tafelablagevorrichtung,
Auswerten der Bildaufnahme zum Bestimmen einer Ist-Tafellage im Maschinenkoordinatensystem,
Erfassen einer Abweichung der bestimmten Ist-Tafellage von der Soll-Lage und
Verwenden der erfassten Abweichung zur Ausrichtung und Positionierung der Materialtafel.

In einem weiteren Aspekt umfasst eine Flachbettwerkzeugmaschine, optional Laserschneidflachbettmaschine zum Ausschneiden von Werkstücken aus einer Materialtafel mit einem Laserstrahl:
eine Tafelablagevorrichtung, optional als ein Palettenwechsler mit einer Palette oder als ein Maschinentisch ausgebildet, zum Bereitstellen einer Ablagefläche zur Lagerung der Materialtafel,
ein Kamerasystem mit mindestens einer Kamera, das zum Erzeugen einer Bildaufnahme der Tafelablagevorrichtung ausgebildet ist, die hinsichtlich des Maschinenkoordinatensystems der Flachbettwerkzeugmaschine räumlich kalibriert ist, wobei die Bildaufnahme optional eine Palette mit der aufliegenden oder vertikal beabstandeten Materialtafel zeigt,
eine Bearbeitungseinheit, die optional als Laserschneideinheit ausgebildet ist, und
eine Steuerungseinheit zum Durchführen eines Verfahrens, wie es zuvor und allgemein hierin beschrieben wird. Ferner kann die Flachbettwerkzeugmaschine optional eine Hebevorrichtung aufweisen. Die mindestens eine Kamera kann an der Bearbeitungseinheit angebracht sein. Ferner kann das Kamerasystem zur zweidimensionalen und/oder dreidimensionalen Bilderfassung ausgebildet sein.

In einigen Weiterbildungen kann die Ist-Tafellage in einer Auflageebene der Tafelablagevorrichtung bestimmt werden. Dabei können die Ist-Tafellage und die Soll-Lage jeweils durch einen Abstand in der Auflageebene zwischen einem Bezugspunkt der Materialtafel und einem Referenzpunkt der Auflageebene sowie durch eine Ausrichtung der Materialtafel in der Auflageebene gegeben werden.

In einigen Weiterbildungen umfasst das Verfahren den Schritt:
Ablegen der Materialtafel auf der Tafelablagevorrichtung, sodass die Ist-Tafellage für eine abgelegte Materialtafel bestimmt wird.

In einigen Weiterbildungen wird ferner eine Hebevorrichtung zum Ablegen der Materialtafel auf der Tafelablagevorrichtung eingesetzt und das Verfahren umfasst ferner die Schritte: Aufnehmen der Materialtafel mit der Hebevorrichtung und
Transportieren der Materialtafel mit der Hebevorrichtung über die Tafelablagevorrichtung, sodass die Ist-Tafellage für eine oberhalb der Tafelablagevorrichtung gehaltene Materialtafel bestimmt wird.

Dabei kann die Ist-Tafellage in der Auflageebene der Tafelablagevorrichtung unter der Annahme einer reinen Absenkbewegung der Materialtafel auf die Tafelablagevorrichtung bestimmt werden. Zusätzlich oder alternativ kann eine Transformationsgleichung einer im Raum bestimmten Lage der Materialtafel in das Maschinenkoordinatensystem mithilfe von mindestens einem Marker oder mindestens einem Schlüsselmerkmal, der oder das an der Hebevorrichtung vorgesehen ist, gewonnen werden, um die Ist-Tafellage in der Auflageebene zu bestimmen. Zusätzlich oder alternativ kann die Hebevorrichtung eine Wiege-Einheit zur Bestimmung der Masse der aufgenommenen Materialtafel umfassen, wobei die Wiege-Einheit optional eine Waage oder eine Recheneinheit, die die Masse aus der ersten Bildaufnahme der Materialtafel und vorgegebenen Parametern der der Materialtafel ableitet, sein kann. Das Verfahren kann entsprechend ferner die folgenden Schritte aufweisen:
Bestimmen der Masse der aufgenommenen Materialtafel,
Vergleichen der bestimmten Masse mit einer vorgegebenen Masse der für die Bearbeitung vorgesehenen Materialtafel und
Ausgeben eines Fehlersignals im Fall, dass das Vergleichen einen Unterschied zwischen der bestimmten Masse und der vorgegebenen Masse ergibt.

In einigen Ausführungsformen kann das Verfahren ferner die folgenden Schritte aufweisen: Ableiten von geometrischen Abmaßen der Materialtafel aus der Bildaufnahme unter Verwendung der räumlichen Kalibration der Kamera und
Bestimmen der Ist-Tafellage anhand der geometrischen Abmaße der Materialtafel.

In einigen Ausführungsformen des Verfahrens kann die erfasste Abweichung verwendet werden, um die Hebevorrichtung derart anzusteuern, dass die Materialtafel an der Soll-Position abgelegt wird, wobei optional ein automatisiertes Ablegen erfolgt. Zusätzlich oder alternativ kann die erfasste Abweichung verwendet werden, um einem Bediener der Flachbettwerkzeugmaschine Information zur Abweichung und optional die Soll-Lage und/oder die Ist-Tafellage anzuzeigen. Dies kann z.B. auf einem Monitor der Flachbettwerkzeugmaschine erfolgen oder in eine Augmented-Reality-Anzeigeeinheit eingeblendet werden. Optional können weitere Prozessinformationen angezeigt werden. Zusätzlich oder alternativ kann die erfasste Abweichung verwendet werden, um den Bearbeitungsprozess und optional die Soll-Lage in Abhängigkeit der Ist-Tafellage und optional einer, insbesondere mit der Kamera erfassten Anordnung von Auflagestegen der Tafelablagevorrichtung anzupassen.

Erfindungsgemäß kann die Soll-Lage:
in Abhängigkeit von einer erfassten Anordnung von Auflagestegen der Tafelablagevorrichtung, die optional mit dem Kamerasystem erfasst wird, zum Zeitpunkt des Ablegens der Materialtafel berechnet werden, und
in Abhängigkeit einer Schachtelung von aus der Materialtafel zu erzeugenden Werkstücken und optional in Abhängigkeit von mindestens einem der Parameter Vermeidung von kippenden Werkstücken, Unterstützung der Werkstücke während des Schneidprozesses und Vermeidung von Schlackespritzern auf Werkstücken und Verschweißen von Werkstücken ermittelt werden.

Alternativ kann die Soll-Lage manuell von einem Bediener der Flachbettwerkzeugmaschine vorgebbar sein.

Die hierin beschriebenen Konzepte betreffen insbesondere die Bearbeitung von Blechen (Blechtafeln, plattenförmige metallische Ausgangswerkstücke) mit einer (Laserschneid-) Flachbettwerkzeugmaschine.

Vorteile der Erfindung umfassen ein positionsgenaues und weitgehend fehlerreduziertes Beladen einer Tafelablagevorrichtung einer Flachbettwerkzeugmaschine mit einer oder mit mehreren Blechtafeln sowie einen erleichterten Transport und eine vereinfachte Positionierung schwerer Einzelteile.

Ferner kann die Erfindung die Prozesssicherheit erhöhen, indem z.B. eine Auflagestegsituation in der Bearbeitung berücksichtigt wird. Beispielhafte Vorgehensweisen bei der Erzeugung von Laserschneidplänen, die dies berücksichtigen, sind in der noch nicht veröffentlichten deutschen Patentanmeldung DE 10 2018 126 077.6 mit Anmeldetag 19. Oktober 2018 der Anmelderin offenbart.

Überdies kann sich eine vorteilhafte Produktivitätssteigerung durch verkürzte Materialwechselzeiten ergeben.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine schematische räumliche Darstellung einer Flachbettwerkzeugmaschine mit einer Palette, die zum Einfahren in die Flachbettmaschine bereitsteht und mit einer Materialtafel beladen ist,
- Fig. 2: eine schematische räumliche Darstellung einer Flachbettwerkzeugmaschine mit einer Hebevorrichtung zum Beladen einer Palette,
- Fig. 3: ein Flussdiagramm zur Verdeutlichung eines Verfahrens zum Beladen einer Tafelablagevorrichtung und
- Fig. 4A u. 4B: schematische Darstellungen von beispielhaften Bildaufnahmen, die zur Unterstützung des Beladevorgangs und der Bearbeitungsplanung einem Bediener angezeigt werden können.

Hierin beschriebene Aspekte basieren zum Teil auf der Erkenntnis, dass der manuell durchgeführte oder mit einer Hebevorrichtung unterstützte Beladevorgang hinsichtlich der Position einer Blechtafel auf einer Tafelablagevorrichtung mithilfe eines optischen Messsystems unterstützt werden kann. So wurde erkannt, dass ein optisches Erfassen der zu bearbeitenden Blechtafel es ermöglichen kann, beispielsweise losgelöst von Anschlägen eine Blechtafel auf der Tafelablagevorrichtung hinsichtlich der vorzunehmenden Bearbeitung korrekt zu positionieren. Dabei kann die Positionierung optional an den Bearbeitungsprozess angepasst werden.

Überdies kann eine Auswertung der Position der optisch erfassten Blechtafel in den Bearbeitungsvorgang der Materialtafel selbst einfließen, so beispielsweise bei
- der Erstellung eines Bearbeitungsplans,
- bei der Überprüfung von Material und Geometrie der abgelegten/abzulegenden Materialtafel und damit der Überprüfung hinsichtlich einer korrekten Auswahl der Materialtafel oder
- bei der Überprüfung der Position einer abgelegten oder abzulegenden Materialtafel hinsichtlich der Konfiguration der Tafelablagevorrichtung, z.B. hinsichtlich der relativen Position der Auflagepunkte zur Schneidlinie.

Erfindungsgemäß kann bei einem manuellen Beladen einer Blechbearbeitungsmaschine (als Beispiel einer Flachbettwerkzeugmaschine) die Position einer Blechtafel (als Beispiel einer Materialtafel) mittels eines optischen Messsystems erfasst und die erfasste aktuelle Position dem Bediener der Blechbearbeitungsmaschine angezeigt werden. Der Bediener kann erfindungsgemäß bei der Ablage einer Materialtafel in einer optimalen bzw. für die Bearbeitung vorgesehenen Ablageposition (Soll-Lage) unterstützt werden, wenn die Ablageposition z.B. vom Steuerungssystem der Flachbettwerkzeugmaschine vorgegeben ist. Die Soll-Lage muss dabei keine absolute Lage sein, sondern kann Toleranzen aufweisen. Z.B. können Toleranzen bis zu +/- 50 mm erlaubt sein, falls z.B. der Bearbeitungsplan diese berücksichtigt hat. Das Steuerungssystem der Flachbettwerkzeugmaschine, insbesondere die Laseransteuerung, kann die tatsächliche (Ist-) Lage (wenn sie z.B. im Toleranzbereich liegt) erkennen und das Maschinenbearbeitungsprogramm (z.B. den Schneidplan) mittels Transformation an die tatsächliche Ist-Lage anpassen. Ebenso kann der Einsatz einer Hebevorrichtung optimiert werden, um den Bediener beim Beladen einer Tafelablagevorrichtung einer Flachbettwerkzeugmaschine und optional auch bei der späteren Vereinzelung von bearbeiteten Teilen optimal zu unterstützen.

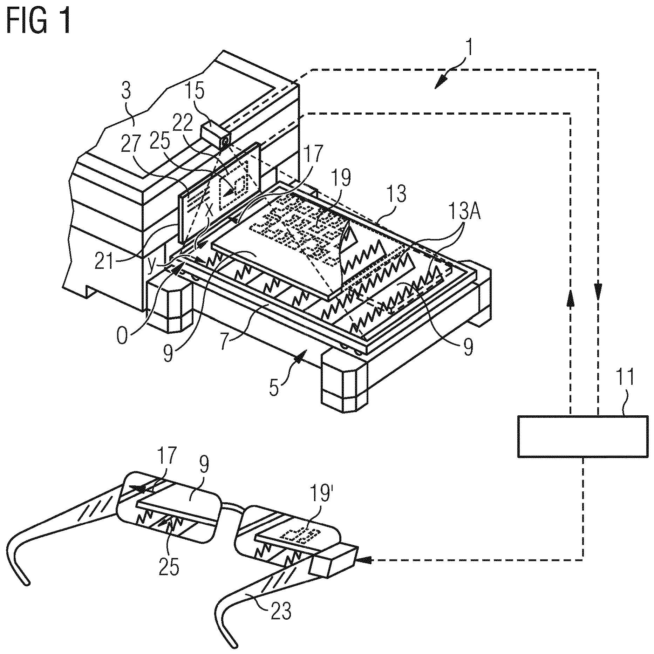

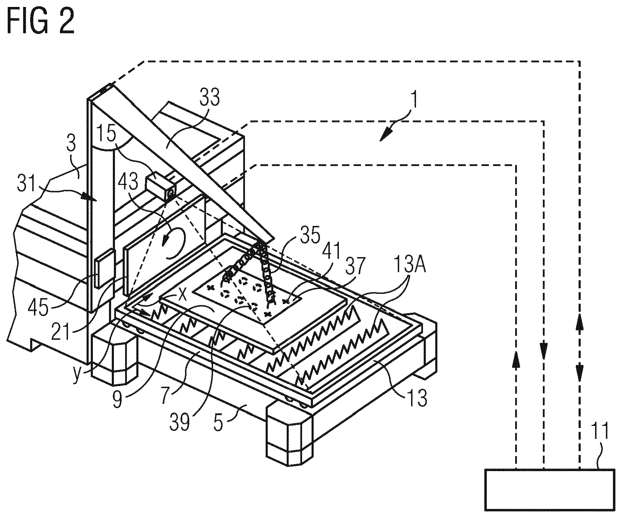

Die Figuren 1 und 2 zeigen beispielhafte Konfigurationen von Flachbettwerkzeugmaschinen 1, bei denen die hierin offenbarten Konzepte umgesetzt werden können. Fig. 1 bezieht sich auf ein manuelles Beladen und verdeutlicht zusätzlich den Aspekt der Informationsdarstellung. Im Unterschied hierzu zeigt Fig. 2 ein mit einer Hebevorrichtung unterstütztes Beladen.

In Fig. 1 umfasst die Flachbettwerkzeugmaschine 1 eine Bearbeitungseinheit 3, beispielsweise eine Schneideinheit, die einen Maschinenbereich darstellt, in dem eine Materialbearbeitung erfolgt, beispielsweise ein Schneidvorgang durchgeführt werden kann.

Die Flachbettwerkzeugmaschine 1 umfasst ferner einen vorgelagerten Palettenwechsler 5, der es erlaubt, den Betrieb der Flachbettwerkzeugmaschine 1 mit einer oder mehreren Paletten 7 durchzuführen. Auf der Palette 7 wurde eine Materialtafel 9 (insbesondere aus Blech) für einen Bearbeitungsvorgang, beispielsweise einen Schneidvorgang, abgelegt. Der Palettenwechsler 5 mit der Palette 7 ist ein Beispiel für eine Tafelablagevorrichtung, die in diesem Fall der Flachbettwerkzeugmaschine 1zugeordnet ist. Allgemein kann die Tafelablagevorrichtung zu einer Vorrichtung zum Trennen von plattenartigen Werkstücken, insbesondere von Metallblechen, wie einer Laser- Flachbettwerkzeugmaschine gehören. Der Bearbeitungsvorgang erfolgt in der Bearbeitungseinheit 3, sobald die Palette 7 mit der Materialtafel 9 in die Bearbeitungseinheit 3 eingefahren wird. Der Ablauf des Bearbeitungsvorgangs wird beispielsweise mit einer Steuerungseinheit 11 gesteuert und überwacht.

Die Palette 7 umfasst einen z. B. rechteckigen Palettenrahmen 13 mit kurzen und langen Seitenabschnitten sowie eine Anordnung von Auflagestegen 13A. Die Auflagestege 13A sind am Palettenrahmen 13 an den langen Seitenabschnitten befestigt und verlaufen parallel zu den kurzen Seitenabschnitten der Palette 7. Auf einer durch die Auflagestege 13 definierten Auflageebene wurde die zu schneidende Materialtafel 9 abgelegt.

Fig. 1 zeigt ferner schematisch eine Kamera 15 als Beispiel eines Kamerasystems für die Erfassung von zweidimensionalen oder dreidimensionalen Aufnahmen. Für mehrdimensionale Aufnahmen können auch mehrere Kameras eingesetzt werden. Die Kamera 15 ist beispielhaft zentral bezüglich des Palettenwechslers 5 mit einem Abstand zur Auflageebene an der Bearbeitungseinheit 3 angebracht und zur Aufnahme der Palette 7 auf diese ausgerichtet. Eine Kamera ist hierin allgemein ein Bildaufzeichnungsgerät, das vorzugsweise im sichtbaren Wellenlängenbereich operiert. Die Bildaufzeichnung kann jedoch auch in anderen Wellenlängenbereich (z.B. infrarot-Bereich) oder auf anderen Strahlungen (Ultraschall-Strahlen) basieren. Für die hierin offenbarten Konzepte kann beispielsweise ein Kamerasystem zur Bilderfassung eingesetzt werden, wie es in der DE 10 2016 120 131 A1 für eine Unterstützung beim Absortieren von Werkstücken oder in der noch nicht veröffentlichten deutschen Patentanmeldung DE 102018 133 524.5 mit Anmeldetag 21. Dezember 2018 der Anmelderin hinsichtlich der Verarbeitung von Restgittern beschrieben wird.

Die Kamera 15 sendet Bilddaten an die Steuerungseinheit 11 der Flachbettwerkzeugmaschine 1, in der ein Bildverarbeitungsalgorithmus durchgeführt werden kann. Im Speziellen wird hierin vorgeschlagen, mit dem Bildverarbeitungsalgorithmus Informationen über die Lage (Position und Ausrichtung) der Materialtafel 9 zu gewinnen und diese im Bearbeitungsvorgang und/oder dessen Vorbereitung zu nutzen. Beispielsweise kann mit dem Bildverarbeitungsalgorithmus aus einer Bildaufnahme der Palette 7 (mit aufliegender Materialtafel 9) eine aktuelle Lage der Materialtafel 9 auf der Palette 7 bestimmt werden. Die Lage und die Ausrichtung der Materialtafel 9 können in Bezug zu einem Referenzpunkt des Bezugssystems der Flachbettwerkzeugmaschine 1 bestimmt werden. Beispielsweise kann der Bildverarbeitungsalgorithmus eine Ausrichtung (Rotation) einer rechteckigen Materialtafel 9 in der Auflageebene und/ oder eine Translation eines Bezugspunkts der Materialtafel 9 bezüglich eines Referenzpunkts 0, der einem Eckpunkt der rechteckig ausgebildeten Palette 7 zugeordnet ist, ableiten.

Beispielsweise ist die Kamera 15 auf ein Maschinenkoordinatensystem der Bearbeitungseinheit 3 kalibriert. Entsprechend kann z.B. eine Transformation von Bildkoordinaten in Maschinenkoordinaten (z.B. als Transformationsgleichung) in der Steuerungseinheit hinterlegt sein, sodass Bildaufnahmen und insbesondere die Lage der darin erfassten Materialtafel 9 in Bezug zum Maschinenkoordinatensystem gesetzt werden können. Mit anderen Worten ermöglicht eine Kalibrierung der Kamera 15 es, eine Translation und/oder eine Rotation der Materialtafel 9 zu einem Referenzpunkt, bzw. zu einer Soll-Lage, die in Bezug zum Referenzpunkt (und üblicherweise mit einem Toleranzbereich) gegeben ist, zu berechnen.

Für einen Bearbeitungsvorgang kann die Palette 7 entlang einer Paletteneinfuhrrichtung 17 in die Bearbeitungseinheit 3 hineingefahren werden. Der dargestellte Palettenwechsler erlaubt einen Betrieb der Laserflachbettmaschine 1 mit einer Palette von einer Seite. Alternativ können auf gegenüberliegenden Seiten der Bearbeitungseinheit 3 je ein Palettenwechsler vorgesehen werden, sodass die Flachbettwerkzeugmaschine 1 von zwei Seiten betrieben werden kann und entsprechend zwei Kamerasysteme benötigt werden.

Fig. 1 deutet beispielhaft Konturen 19 von aus der Materialtafel 9 auszuschneidenden Teilen an, wie sie in einem Bearbeitungsplan, hier einem Schneidplan, hinsichtlich einer Soll-Lage festgelegt wurden.

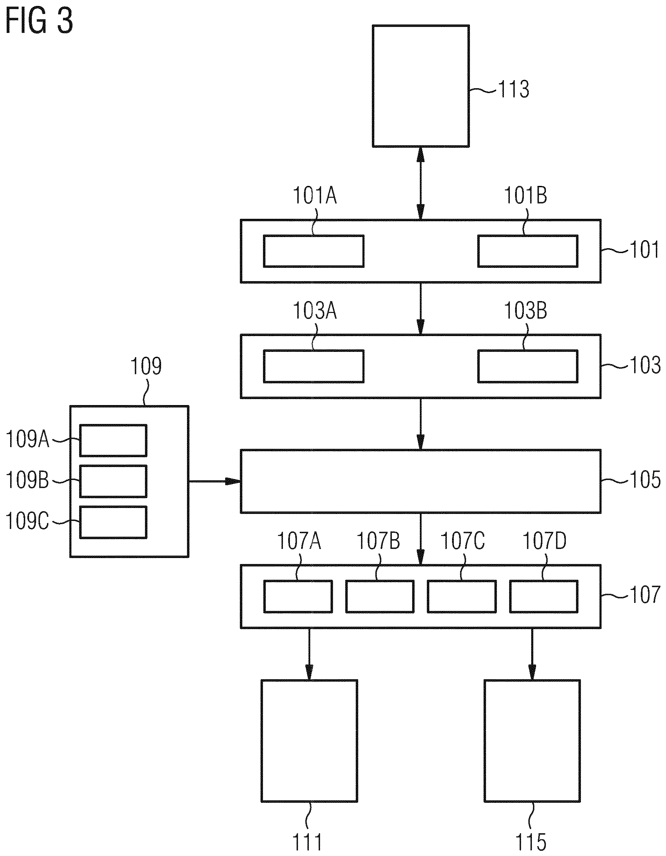

Wie in Zusammenhang mit Fig. 3 erläutert wird, dient die Kamera 15 gemäß den hierin offenbarten Konzepten dem Erzeugen von Bildaufnahmen der Materialtafel 9 im Bereich der Tafelablagevorrichtung (in Fig. 1 abgelegt und in Fig. 2 kurz vor dem Ablegen). Anschließend werden die Bildaufnahmen ausgewertet, um den Beladevorgang zu unterstützen. Beispielsweise können Ergebnisse der Auswertung von der Steuerungseinheit 11 auf einem - zum Datenaustausch mit der Steuerungseinheit 11 verbundenen - Monitor 21 ausgegeben werden. Der Monitor 21 ist z.B. für einem Bediener, der sich im Bereich des Palettenwechslers 5 aufhält, möglichst gut sichtbar an der Bearbeitungseinheit3 angeordnet. Fig. 1 zeigt eine Bildaufnahme 22 der abgelegten Materialtafel 9, wie sie auf dem Monitor 21 angezeigt wird.

Alternativ oder zusätzlich können die Ergebnisse des Bildverarbeitungsalgorithmus als Information in das Sichtfeld einer - zum Datenaustausch mit der Steuerungseinheit 11 verbundenen - (3D-) Datenbrille 23 eingeblendet werden. Blickt der Träger (nicht gezeigt) der Datenbrille 23 auf die Palette 7, kann ihm Zusatzinformation zur Positionierung der Materialtafel 9 angezeigt werden.

Beispielhaft zeigen in Fig. 1 die Datenbrille 23 und der Monitor 21 einen Verschiebepfeil 25, der an der gesehenen oder aufgenommenen Materialtafel 9 ansetzt und die Richtung andeutet, in der die Materialtafel 9 zu bewegen ist, um in eine Soll-Lage zu kommen. Wie bereits angesprochen können die Datenbrille 23 und der Monitor 21 dem Bediener zusätzliche Information zum aktuellen Bearbeitungsvorgang anzeigen. Beispielhaft sind in Fig. 1 Konturen 19' zu schneidender Werkstücke auf der Datenbrille 23 und Auftragsdaten 27 zu einem zu schneidenden Werkstück wie zum Beispiel Informationen zur Materialtafel (laterale Ausmaße und Dicke sowie Tafelmaterialtyp) auf dem Monitor 21 angedeutet.

Die in Fig. 2 dargestellte Flachbettwerkzeugmaschine 1 umfasst eine Hebevorrichtung 31 zum Transportieren und Ablegen von insbesondere großen Materialtafeln, wobei die Hebevorrichtung auch unabhängig von der Flachbettwerkzeugmaschine 1 vorgesehen sein kann. Hinsichtlich der Ausgestaltung der Tafelablagevorrichtung, des Kamerasystems etc. wird auf Fig. 1 verwiesen. Die Steuerungseinheit 11 ist beispielsweise mit der Bearbeitungseinheit 3, der Hebevorrichtung 31, dem Monitor 21 und der Kamera 15 zum Datenaustausch verbunden.

In Fig. 2 ist die Hebevorrichtung 31 schematisch als Kran mit einem Ausleger 33 dargestellt. Am Ausleger 33 hängt beispielsweise an einer Kette 35 oder einem starren Halterungssystem eine Haltevorrichtung 37. Die Haltevorrichtung 37 erlaubt es, die Materialtafel 9 beispielsweise über Sauger 39 zu fixieren. Beispielsweise wird mit der Hebevorrichtung 31 eine oberste Materialtafel von einer Rohtafelpalette (nicht gezeigt) aufgenommen und über die Palette 7 geschwenkt, um sie dort abzulegen.

Fig. 2 zeigt den Zustand kurz vor dem Ablegen, in dem die Materialtafel 9 in etwa über der Soll-Lage auf der Palette 7 schwebt. In dieser (ersten) Ist-Tafellage wird mit dem Kamerasystem 15 eine (erste) Bildaufnahme erstellt. Dabei kann die Erkennung der Position und Ausrichtung der Materialtafel 9 im Raum beispielsweise mit an der Haltevorrichtung 37 vorgesehenen Markern 41 unterstützt werden.

Ergebnisse des Bildverarbeitungsalgorithmus können einem Bediener wieder beispielsweise auf dem Monitor 21 angezeigt (in Fig. 2 ist beispielhaft ein Pfeil 43 zur Verdeutlichung einer benötigten Drehung angedeutet) oder in das Sichtfeld einer Datenbrille eingeblendet werden. Ferner können die Informationen zum Steuern der Hebevorrichtung 31 derart genutzt werden, dass die Materialtafel 9 genau über die Soll-Lage bewegt wird und entsprechend auf der Palette 7 abgelegt werden kann. Dies kann teil- oder vollautomatisiert erfolgen.

Die Hebevorrichtung 31 kann ferner eine Wiege-Einheit zum Bestimmen des Gewichts der angehängten Materialtafel 9 aufweisen. Das bestimmte Gewicht ermöglicht eine Überprüfung, ob die richtige Materialtafel aufgenommen wurde oder nicht. Die Wiege-Einheit kann z.B. auf einer Waage 45 und/oder auf einer Auswertung der erfassten Bildaufnahmen basieren. In letzterem Fall kann die Steuerungseinheit 11 aus den gewonnenen Ausmaßen der Materialtafel 9 zusammen mit Materialinformationen (Materialtyp) auf das Gewicht der Materialtafel 9 zurückschließen.

Fig. 3 verdeutlicht in einem Flussdiagramm verschiedene Aspekte, die einzeln oder in Gruppen in ein Verfahren zum Beladen einer Tafelablagevorrichtung einer Flachbettwerkzeugmaschine mit einer oder mit mehreren Materialtafeln einfließen können. Dabei sind die hierin vorgeschlagenen Konzepte insbesondere bei Mehrtafelbelegungen von Vorteil, wenn z.B. die Ablagepositionen (Soll-Lagen) nicht aller Materialtafeln über Anschläge vorgegeben werden können.

Ausgangspunkt ist das Bereitstellen eines optischen Messsystems (Kamerasystem) bestehend aus 2D- und/oder 3D-Kameras. Das Messsystem erzeugt eine erste Bildaufnahme der Materialtafel 9 (Schritt 101), aus der eine erste (aktuelle) Ist-Tafellage abgeleitet werden kann. Die Erzeugung der ersten Bildaufnahme kann nach erfolgtem Ablegen der Materialtafel auf einer Auflageebene erfolgen (Schritt 101A). Alternativ kann die erste Bildaufnahme der Materialtafel 9 erfasst werden, während sich die Materialtafel 9 an der Hebevorrichtung oberhalb der Auflageebene befindet (Schritt 101B). Die Auflageebene wird auch als Arbeitsfläche bezeichnet, wie sie z.B. von der Tafelablagevorrichtung (beispielsweise ein Maschinentisch oder eine Palette) bereitgestellt wird.

Anschließend erfolgt ein Auswerten der ersten Bildaufnahme (Schritt 103).

Wird die Materialtafel 9 auf dem Maschinentisch oder der Palette abgelegt, kann die Blechlage über die geometrischen Abmaße der Materialtafel 9 erfasst werden (Schritt103A).

Soll die Materialtafel 9 unter Verwendung einer Hebevorrichtung auf dem Maschinentisch oder der Palette abgelegt werden, kann das optische Messsystem die Position und Orientierung der an der Hebevorrichtung befindlichen Materialtafel 9 relativ zur Soll-Position kurz vor dem Ablegen erfassen (Schritt 103B). Vorausgesetzt eine rein vertikale Ablagebewegung wird vorgenommen, kann bei einer noch nicht abgelegten Materialtafel die Ist-Lage für die angehobene Materialtafel durch Projektion der im Raum bestimmten Lage auf die Auflageebene abgeleitet werden. Bei der Bestimmung der Lage im Raum können Marker oder Keyfeature-Punkte (Schlüsselmerkmale) an der Hebevorrichtung in Kombination mit der optischen Erfassung der Blechorientierung die Ermittlung einer Transformationsgleichung in das Maschinenkoordinatensystem bzw. Palettenkoordinatensystem erleichtern. Allgemein können erfindungsgemäß Toleranzen in der Angabe von Soll-Lagen und oder bei dem Erfassen von Ist-Lagen berücksichtig werden. So sind Toleranzen von beispielsweise bis zu +/- 50 mm bei der Positionierung üblich.

Die Auswertung erlaubt es, eine Abweichung der bestimmten Ist-Tafellage von der Soll-Lage beispielsweise mit einem Bildverarbeitungsalgorithmus zu erfassen, (Schritt 105) und diese zur Ausrichtung und Positionierung der Materialtafel zu verwenden (Schritt107).

Beispielsweise kann einem Bediener die aktuelle Lage, ein Korrekturmaß und/oder die (optimale) Soll-Lage angezeigt werden (Schritt 107A). Die Darstellung der Information kann auch mit Hilfe von Augmented-Reality (AR) erfolgen, indem z.B. im Livebild der Datenbrille die aktuelle Lage, das Korrekturmaß und/oder die Soll-Lage eingeblendet werden (Schritt 107B). Alternativ ist die Darstellung auf einem Monitor, der insbesondere auch mit der Hebevorrichtung in Verbindung stehen kann, möglich (Schritt 107C). Zusätzlich können Informationen zum aktuellen Beladeprozess, wie Rohtafelinformationen, Mehrtafelbelegung und Ablageposition, sowie Informationen zum darauffolgenden Beladeprozess angezeigt werden (Schritt 107D).

Zur Bestimmung der Abweichung ist die Soll-Lage bereitzustellen (Schritt 109). Allgemein kann die Soll-Lage manuell vorgegeben (Schritt 109A) oder in Abhängigkeit der Auflagestegkonfiguration an Laserflachbettmaschinen zur Beladezeit berechnet werden (Schritt 109B). Ferner kann die Soll-Lage in Abhängigkeit einer Teileschachtelung auf der Materialtafel, insbesondere in Abhängigkeit von Parametern wie Vermeidung von kippenden Teilen, optimale Unterstützung der Teile während des Schneidprozesses, Vermeidung von Schlackespritzern und Vermeiden von Verschweißen von Teilen mit der Unterlage ermittelt werden (Schritt 109C).

Ferner kann die Schachtelung der zu erzeugenden Teile in Abhängigkeit der Beladeposition und der Auflagestegkonfiguration nachträglich angepasst werden, insbesondere optimiert werden (Schritt 111). Dies kann in Abhängigkeit von Parametern wie Vermeidung von kippenden Teilen, optimale Unterstützung der Teile z.B. während des Schneidprozesses, Vermeidung von Schlackespritzern und Vermeiden von Verschweißen von Teilen mit der Unterlage erfolgen.

Bei Verwendung einer Hebevorrichtung mit Gewichtsbestimmungsmöglichkeit kann die Masse der Materialtafel erfasst werden (Schritt 113). Die Masse der zu beladenden Materialtafel kann beispielsweise mit einer Waage der Hebevorrichtung gemessen oder aus der materialspezifischen Dichte und den geometrischen Abmessungen der Materialtafel berechnet werden. Weichen berechnetes und reales Gewicht der Materialtafel voneinander oder von einem Soll-Gewicht ab, kann auf einen Fehler geschlossen werden (z.B. falsches Rohmaterial, mehrere aneinanderhaftende Tafeln etc.). Die Gewichtsbestimmungsmöglichkeit kann somit das Vermeiden von Fehlern beim Beladen erlauben.

Die Hebevorrichtung kann gemäß der eingangs aufgeführten DE 10 2017 223 574 A1 ausgeführt werden. Ferner kann für die Vereinzelung von Teilen aus einem Restgitter nach dem Bearbeitungsvorgang die Hebevorrichtung mit Passivsaugern (modular) bestückt werden, um dem Bediener beim Herausheben schwerer Teile (z.B. < 20 kg) zu unterstützen.

Zusätzlich oder alternativ zu den vorhergehend beschriebenen Schritten kann basierend auf der Auswertung der ersten Bildaufnahme (Schritt 103) und dem Erfassen der Abweichung (Schritt 105) ein voll- oder teilautomatisiertes Ablegen der Materialtafel vorgenommen werden. Hierzu kann der Bediener beispielsweise einen "Automatikmodus" zum Auflegen / Ablegen der Materialtafel nach dem manuell gesteuerten Greifen auswählen (Schritt 115). Der (Teil-) Automatikmodus kann ferner eine Ansteuerung des Krans (der Hebevorrichtung) per Funk und/oder durch das optische Messsystem (die Steuerungseinheit) umfassen. Ergänzend kann eine Sicherheitsüberwachung mit einem Raum-Scanner vorgesehen werden.

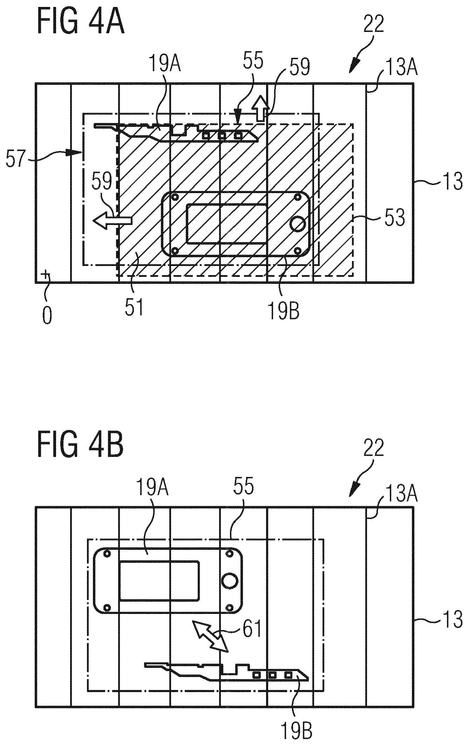

Die Figuren 4A und 4B zeigen schematische Darstellungen des Auflagebereichs, wie sie z.B. auf dem Monitor 21 angezeigt oder in die Datenbrille 23 eingeblendet werden können.

Die Darstellung der Fig. 4A umfasst inhaltlich vereinfachte Bildaufnahmen 22 einer Palette, wie sie z.B. in Fig. 1 gezeigt wird. Man erkennt einen rechteckigen Rahmen 13, der die Palette 7 begrenzt, sowie die im Rahmen 13 gleichmäßig angeordneten Auflagestege 13A. Die Bildaufnahme 22 zeigt ferner eine Oberfläche 51 (schraffiert) einer Materialtafel sowie deren Außenkontur 53 (gestrichelt) in einer Rechteckform, die eine Ist-Lage 55 der Materialtafel entsprechen. Ferner werden Konturen 19 von zu schneidenden Werkstücken angezeigt, wie sie mit einem auf eine feste Soll-Lage 57 (strich-punktiert) ausgerichteten Schneidplan aus der Materialtafel ausgeschnitten werden sollen. Die Ist-Tafellage 55 und die Soll-Lage 57 sind beispielsweise jeweils gegeben durch einen Abstand in der Auflageebene zwischen einem Bezugspunkt der Materialtafel 9 (z.B. einen Mittel- oder Flächenschwerpunkt) und einem Referenzpunkt 0 der Auflageebene (der Palette) und eine Ausrichtung/Ausrichtung der Materialtafel 9 in der Auflageebene.

Man erkennt, dass die aktuelle Ist-Lage, wie sie mit der Bildaufnahme 22 erfasst wurde, den Überlapp der Kontur 19A mit der so positionierten Materialtafel nicht gewährleisten würde. Dies erkennt der Bildverarbeitungsalgorithmus und veranlasst die Anzeige von Verschiebepfeilen 59.

Basierend auf dieser Anzeige kann der Bediener die Lage und Ausrichtung der Materialtafel manuell korrigieren oder eine entsprechende automatisierte Korrektur vornehmen lassen. Der Fachmann wird erkennen, dass das Vorgehen zur Erhöhung der Genauigkeit insbesondere iterativ mit nachfolgenden (zweiten, dritten, etc.) Bildaufnahmen durchgeführt werden kann.

Zur Vollständigkeit ist ein Referenzpunkt 0 eines Palettenkoordinatensystems auf der Bildaufnahme 22 eingezeichnet, der den Bezug der Palette zum Maschinenkoordinatensystem herstellt.

Fig. 4B verdeutlicht, dass basierend auf der erzeugten Bildaufnahme auch eine Anpassung des Bearbeitungsplans angeregt werden kann. Beispielsweise kann bei der Überprüfung der Schachtelung der Werkstücke erkannt werden, dass bei der Einnahme der Soll-Lage 22 ein mit einem Austauschpfeil 61 angeregter Austausch von Werkstückpositionen zu einer höheren Bearbeitungsqualität führen würde.

Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Verfahren zum Beladen einer Tafelablagevorrichtung einer Flachbettwerkzeugmaschine (1) mit einer Materialtafel (9), wobei
- die Materialtafel (9) der Bearbeitung mit der Flachbettwerkzeugmaschine (1) ausgehend von einer der Bearbeitung in einem Maschinenkoordinatensystem zugeordneten Soll-Lage (57) zuzuführen ist und
- die Flachbettwerkzeugmaschine (1) ein Kamerasystem mit mindestens einer Kamera (15) umfasst, das zum Erzeugen von Bildaufnahmen (22) der Tafelablagevorrichtung ausgebildet ist, die zu dem Maschinenkoordinatensystem der Flachbettwerkzeugmaschine (1) räumlich kalibriert sind,
mit den Schritten:
Erzeugen (Schritt 101) einer Bildaufnahme (22) der Materialtafel (9) im Bereich der Tafelablagevorrichtung,
Auswerten (Schritt 103) der Bildaufnahme (22) zum Bestimmen einer Ist-Tafellage (55) im Maschinenkoordinatensystem,
Erfassen (Schritt 105) einer Abweichung der bestimmten Ist-Tafellage (55) von der Soll-Lage (57) und
Verwenden (Schritt 107) der erfassten Abweichung zur Ausrichtung und Positionierung der Materialtafel (9),
**dadurch gekennzeichnet, dass** die Soll-Lage (57)
- in Abhängigkeit von einer erfassten Anordnung von Auflagestegen (13A) der Tafelablagevorrichtung, die mit dem Kamerasystem erfasst wird, zum Zeitpunkt des Ablegens der Materialtafel (9) berechnet wird, und
- in Abhängigkeit einer Schachtelung von aus der Materialtafel (9) zu erzeugenden Werkstücken ermittelt wird.

2. Verfahren nach einem der vorhergehenden Ansprüche, wobei die Ist-Tafellage (55) in einer Auflageebene der Tafelablagevorrichtung bestimmt wird und wobei die Ist-Tafellage (55) und die Soll-Lage (57) jeweils gegeben sind durch einen Abstand in der Auflageebene zwischen einem Bezugspunkt der Materialtafel (9) und einem Referenzpunkt (0) der Auflageebene und eine Ausrichtung der Materialtafel (9) in der Auflageebene.

3. Verfahren nach Anspruch 1 oder 2, ferner mit:
Ablegen der Materialtafel (9) auf der Tafelablagevorrichtung, sodass die Ist-Tafellage (55) für eine abgelegte Materialtafel (9) bestimmt wird.

4. Verfahren nach Anspruch 1 oder 2, wobei ferner eine Hebevorrichtung (31) zum Ablegen der Materialtafel (9) auf der Tafelablagevorrichtung vorgesehen ist, ferner mit:
Aufnehmen der Materialtafel (9) mit der Hebevorrichtung (31) und
Transportieren der Materialtafel (9) mit der Hebevorrichtung (31) über die Tafelablagevorrichtung, sodass die Ist-Tafellage (55) für eine oberhalb der Tafelablagevorrichtung gehaltene Materialtafel (9) bestimmt wird.

5. Verfahren nach Anspruch 4, wobei die Ist-Tafellage in der Auflageebene der Tafelablagevorrichtung unter der Annahme einer reinen Absenkbewegung der Materialtafel (9) auf die Tafelablagevorrichtung bestimmt wird und/oder
wobei eine Transformationsgleichung einer im Raum bestimmten Lage der Materialtafel (9) in das Maschinenkoordinatensystem mithilfe von mindestens einem Marker (41) oder mindestens einem Schlüsselmerkmal, die an der Hebevorrichtung (61) vorgesehen sind, gewonnen wird, um die Ist-Tafellage (55) in der Auflageebene zu bestimmen und/oder
wobei die Hebevorrichtung (31) eine Wiege-Einheit zur Bestimmung der Masse der aufgenommenen Materialtafel (9) umfasst, wobei die Wiege-Einheit optional eine Waage (45) oder eine Recheneinheit, die die Masse aus der ersten Bildaufnahme (22) der Materialtafel (9) und vorgegebenen Parametern der der Materialtafel (9) ableitet, ist, und das Verfahren ferner die Schritte aufweist:
- Bestimmen der Masse der aufgenommenen Materialtafel (9),
- Vergleichen der bestimmten Masse mit einer vorgegebenen Masse der für die Bearbeitung vorgesehenen Materialtafel (9) und
- Ausgeben eines Fehlersignals im Fall, dass das Vergleichen einen Unterschied zwischen der bestimmten Masse und der vorgegebenen Masse ergibt.

6. Verfahren nach einem der vorhergehenden Ansprüche, ferner mit
Ableiten von geometrischen Abmaßen der Materialtafel (9) aus der Bildaufnahme (22) unter Verwendung der räumlichen Kalibration der Kamera (15) und
Bestimmen der Ist-Tafellage (55) anhand der geometrischen Abmaße der Materialtafel (9).

7. Verfahren nach einem der Ansprüche 4 oder 5, wobei die erfasste Abweichung verwendet wird, um die Hebevorrichtung (31) derart anzusteuern, dass die Materialtafel an der Soll-Position abgelegt wird, wobei optional ein automatisiertes Ablegen erfolgt.

8. Verfahren nach einem der vorhergehenden Ansprüche, wobei die erfasste Abweichung verwendet wird, um einem Bediener der Flachbettwerkzeugmaschine (1) Information zur Abweichung und optional die Soll-Lage (57) und/oder die Ist-Tafellage (55), optional auf einem Monitor (21) der Flachbettwerkzeugmaschine (1) oder eingeblendet in eine Augmented-Reality-Anzeigeeinheit (23), anzuzeigen, wobei optional weitere Prozessinformationen angezeigt werden können.

9. Verfahren nach einem der vorhergehenden Ansprüche, wobei die erfasste Abweichung verwendet wird, um den Bearbeitungsprozess und optional die Soll-Lage (57) in Abhängigkeit der Ist-Tafellage (55) und einer mit der Kamera (15) erfassten Anordnung von Auflagestegen (13A) der Tafelablagevorrichtung anzupassen.

10. Verfahren nach einem der vorhergehenden Ansprüche, wobei die Anordnung von Auflagestegen (13A) der Tafelablagevorrichtung mit dem Kamerasystem erfasst wird.

11. Flachbettwerkzeugmaschine (1), wobei die Flachbettwerkzeugmaschine (1) umfasst:
eine Tafelablagevorrichtung zum Bereitstellen einer Ablagefläche zur Lagerung der Materialtafel (9),
ein Kamerasystem mit mindestens einer Kamera (15), das zum Erzeugen einer Bildaufnahme (22) der Tafelablagevorrichtung ausgebildet ist, die hinsichtlich des Maschinenkoordinatensystems der Flachbettwerkzeugmaschine (1) räumlich kalibriert ist,
eine Bearbeitungseinheit (3),
eine Hebevorrichtung (31) und
eine Steuerungseinheit (11), wobei die Steuerungseinheit (11) zum Durchführen eines Verfahrens nach einem der vorhergehenden Ansprüche eingerichtet ist.

12. Flachbettwerkzeugmaschine (1) nach Anspruch 11, wobei die mindestens eine Kamera (15) an der Bearbeitungseinheit (3) angebracht ist und/oder
das Kamerasystem zur zweidimensionalen und/oder dreidimensionalen Bilderfassung ausgebildet ist.

13. Flachbettwerkzeugmaschine (1) nach Anspruch 11 oder 12, wobei die Flachbettwerkzeugmaschine (1) als Laserschneidflachbettmaschine zum Ausschneiden von Werkstücken aus einer Materialtafel (9) mit einem Laserstrahl ausgebildet ist und die Bearbeitungseinheit (3) als Laserschneideinheit ausgebildet ist.

14. Flachbettwerkzeugmaschine (1) nach einem der Ansprüche 11 bis 13, wobei die Tafelablagevorrichtung als ein Palettenwechsler (5) mit einer Palette (7) oder als ein Maschinentisch ausgebildet ist und die Bildaufnahme (22) optional eine Palette (7) mit der aufliegenden oder vertikal beabstandeten Materialtafel (9) zeigt.

## Claims

1. A method for loading a material panel (9) onto a panel depositing device of a flatbed machine tool (1), wherein
- the material panel (9) of the machining with the flatbed machine tool (1) is to be fed in starting from a target position (57) assigned to the machining in a machine coordinate system, and
- the flatbed machine tool (1) includes a camera system with at least one camera (15) designed to produce image recordings (22) of the panel depositing device, the recordings being spatially calibrated to the machine coordinate system of the flatbed machine tool (1),
comprising the steps:
producing (step 101) an image recording (22) of the material panel (9) in the region of the panel depositing device,
evaluating (step 103) the image recording (22) to determine an actual panel position (55) in the machine coordinate system,
detecting (step 105) a deviation of the determined actual panel position (55) from the target position (57) and
using (step 107) the detected deviation to align and position the material panel (9), **characterized in that** the target position (57)
- is calculated depending on a detected arrangement of supporting bars (13A), which are detected with the camera system, of the panel depositing device at the time the material panel (9) is deposited, and
- is ascertained depending on a nesting of workpieces to be produced from the material panel (9).

2. The method according to any one of the preceding claims, wherein the actual panel position (55) is determined in a support plane of the panel depositing device and wherein the actual panel position (55) and the target position (57) are each given by a separation in the support plane between a reference point of the material panel (9) and a reference point (0) of the support plane and by an alignment of the material panel (9) in the support plane.

3. The method according to claim 1 or 2, further comprising:
depositing the material panel (9) on the panel depositing device so that the actual panel position (55) is determined for a deposited material panel (9).

4. The method according to claim 1 or 2, wherein a lifting device (31) is further provided for depositing the material panel (9) on the panel depositing device, further comprising:
receiving the material panel (9) with the lifting device (31) and
transporting the material panel (9) with the lifting device (31) above the panel depositing device so that the actual panel position (55) is determined for a material panel (9) held above the panel depositing device.

5. The method according to claim 4, wherein, assuming a purely lowering movement of the material panel (9) onto the panel depositing device, the actual panel position is determined in the support plane of the panel depositing device and/or
wherein in order to determine the actual panel position (55) in the support plane, a transformation equation of a spatially determined position of the material panel (9) into the machine coordinate system is obtained with the aid of at least one marker (41) or at least one key feature which is provided on the lifting device (61), and/or
wherein the lifting device (31) includes a weighing unit for determining the mass of the received material panel (9), wherein the weighing unit is optionally a balance (45) or a computing unit which derives the mass from the first image recording (22) of the material panel (9), as well as predefined material panel (9) parameters, and the method further has the steps of:
- determining the mass of the received material panel (9),
- comparing the determined mass with a predefined mass of the material panel (9) provided for the machining, and
- outputting an error signal in the case that the comparison yields a difference between the determined mass and the predefined mass.

6. The method according to any one of the preceding claims, further comprising
deriving geometrical dimensions of the material panel (9) from the image recording (22) by using the spatial calibration of the camera (15) and
determining the actual panel position (55) on the basis of the geometrical dimensions of the material panel (9).

7. The method according to any one of claims 4 or 5, wherein the detected deviation is used to activate the lifting device (31) in such a way that the material panel is deposited at the target position, wherein optionally an automated depositing takes place.

8. The method according to any one of the preceding claims, wherein the detected deviation is used to display to an operator of the flatbed machine tool (1) information concerning the deviation, and optionally the target position (57) and/or the actual panel position (55), optionally on a monitor (21) of the flatbed machine tool (1) or superimposed in an augmented reality display unit (23), wherein further process information can be optionally displayed.

9. The method according to any one of the preceding claims, wherein the detected deviation is used to adapt the machining process, and optionally the target position (57), depending on the actual panel position (55) and on an arrangement, detected with the camera (15), of supporting bars (13A) of the panel depositing device.

10. The method according to any one of the preceding claims, wherein the arrangement of supporting bars (13A) of the panel depositing device is detected with the camera system.

11. A flatbed machine tool (1), wherein the flatbed machine tool (1) comprises:
a panel depositing device for providing a deposition surface for storing the material panel (9),
a camera system with at least one camera (15) designed for producing an image recording (22) of the panel depositing device, the camera being spatially calibrated with respect to the machine coordinate system of the flatbed machine tool (1),
a machining unit (3),
a lifting device (31) and
a control unit (11), wherein the control unit (11) is configured to carry out a method according to any one of the preceding claims.

12. The flatbed machine tool (1) according to claim 11, wherein the at least one camera (15) is attached to the machining unit (3), and/or
the camera system is designed for two-dimensional and/or three-dimensional image detection.

13. The flatbed machine tool (1) according to claim 11 or 12, wherein the flatbed machine tool (1) is designed as a laser cutting flatbed machine tool for cutting out workpieces from a material panel (9) with a laser beam, and the machining unit (3) is designed as a laser cutting unit.

14. The flatbed machine tool (1) according to any one of claims 11 to 13, wherein the panel depositing device is designed as a pallet changer (5) with a pallet (7) or as a machine table, and the image recording (22) optionally shows a pallet (7) with the material panel (9) lying thereon or vertically separated therefrom.

## Revendications

1. Procédé pour le chargement d'un dispositif de dépôt de tôle d'une machine-outil à table plane (1) avec une tôle de matériau (9), dans lequel
- la tôle de matériau (9) doit être amenée à l'usinage avec la machine-outil à table plane (1) à partir d'une position théorique (57) assignée à l'usinage dans un système de coordonnées machine, et
- la machine-outil à table plane (1) comprend un système de caméras doté d'au moins une caméra (15), lequel est conçu pour générer des prises d'images (22) du dispositif de dépôt de tôle, qui sont spatialement calibrées par rapport au système de coordonnées machine de la machine-outil à table plane (1),
avec les étapes :
génération (étape 101) d'une prise d'image (22) de la tôle de matériau (9) dans la zone du dispositif de dépôt de tôle,
analyse (étape 103) de la prise d'image (22) pour déterminer une position réelle (55) de la tôle dans le système de coordonnées machine,
détection (étape 105) d'un écart entre la position réelle (55) déterminée de la tôle et la position théorique (57), et
utilisation (étape 107) de l'écart détecté pour l'orientation et le positionnement de la tôle de matériau (9),
**caractérisé en ce que** la position théorique (57)
- est calculée au moment du dépôt de la tôle de matériau (9), en fonction d'une disposition détectée de traverses de support (13A) du dispositif de dépôt de tôle de matériau, laquelle est détectée par le système de caméras, et
- est établie en fonction d'une imbrication de pièces à usiner devant être produites à partir de la tôle de matériau (9).

2. Procédé selon l'une quelconque des revendications précédentes, dans lequel la position réelle (55) de la tôle est déterminée dans un plan d'appui du dispositif de dépôt de tôle et dans lequel la position réelle (55) de la tôle et la position théorique (57) sont chacune définies par une distance, dans le plan d'appui, entre un point de référence de la tôle de matériau (9) et un point de référence (0) du plan d'appui, ainsi que par une orientation de la tôle de matériau (9) dans le plan d'appui.

3. Procédé selon la revendication 1 ou 2, comprenant en outre :
le dépôt de la tôle de matériau (9) sur le dispositif de dépôt de tôle, de telle sorte que la position réelle (55) de la tôle soit déterminée pour une tôle de matériau (9) déposée.

4. Procédé selon la revendication 1 ou 2, dans lequel un dispositif de levage (31) est en outre prévu pour déposer la tôle de matériau (9) sur le dispositif de dépôt de tôle, comprenant en outre :
le prélèvement de la tôle de matériau (9) avec le dispositif de levage (31), et
le transport de la tôle de matériau (9) avec le dispositif de levage (31) au-dessus du dispositif de dépôt de tôle, de telle sorte que la position réelle (55) de la tôle soit déterminée pour une tôle de matériau (9) maintenue au-dessus du dispositif de dépôt de tôle.

5. Procédé selon la revendication 4, dans lequel la position réelle de la tôle est déterminée dans le plan d'appui du dispositif de dépôt de tôle en supposant un mouvement de descente exclusif de la tôle de matériau (9) sur le dispositif de dépôt de tôle et/ou
dans lequel une équation de transformation d'une position de la tôle de matériau (9) déterminée dans l'espace vers le système de coordonnées machine est obtenue à l'aide d'au moins un marqueur (41) ou d'au moins une caractéristique clé, qui sont prévus sur le dispositif de levage (61), afin de déterminer la position réelle (55) de la tôle dans le plan d'appui et/ou
dans lequel le dispositif de levage (31) comprend une unité de pesée destinée à déterminer la masse de la tôle de matériau (9) prélevée, dans lequel l'unité de pesée est de manière optionnelle une balance (45) ou une unité de calcul qui déduit la masse à partir de la première prise d'image (22) de la tôle de matériau (9) et de paramètres prédéfinis de la tôle de matériau (9), et le procédé présente en outre les étapes :
- détermination de la masse de la tôle de matériau (9) prélevée,
- comparaison de la masse déterminée avec une masse prédéfinie de la tôle de matériau (9) prévue pour l'usinage, et
- émission d'un signal d'erreur dans le cas où la comparaison révèle une différence entre la masse déterminée et la masse prédéfinie.

6. Procédé selon l'une des revendications précédentes, comprenant en outre
la déduction des dimensions géométriques de la tôle de matériau (9) à partir de la prise d'image (22) en utilisant la calibration spatiale de la caméra (15), et
la détermination de la position réelle (55) de la tôle sur la base des dimensions géométriques de la tôle de matériau (9).

7. Procédé selon l'une des revendications 4 ou 5, dans lequel l'écart détecté est utilisé pour commander le dispositif de levage (31) de manière à ce que la tôle de matériau soit déposée à la position théorique, dans lequel un dépôt automatisé est réalisé de manière optionnelle.

8. Procédé selon l'une quelconque des revendications précédentes, dans lequel l'écart détecté est utilisé pour afficher à un opérateur de la machine-outil à table plane (1) des informations relatives à l'écart et, de manière optionnelle, la position théorique (57) et/ou la position réelle (55) de la tôle, de manière optionnelle sur un moniteur (21) de la machine-outil à table plane (1) ou superposées dans une unité d'affichage en réalité augmentée (23), dans lequel des informations de procédé supplémentaires peuvent être affichées en option.

9. Procédé selon l'une quelconque des revendications précédentes, dans lequel l'écart détecté est utilisé pour adapter le processus d'usinage et, de manière optionnelle, la position théorique (57) en fonction de la position réelle (55) de la tôle et d'une disposition de traverses de support (13A) du dispositif de dépôt de tôle détectée avec la caméra (15).

10. Procédé selon l'une quelconque des revendications précédentes, dans lequel la disposition de traverses de support (13A) du dispositif de dépôt de tôle est détectée avec le système de caméras.

11. Machine-outil à table plane (1), dans laquelle la machine-outil à table plane (1) comprend :
un dispositif de dépôt de tôle destiné à fournir une surface d'appui pour le stockage de la tôle de matériau (9),
un système de caméras doté d'au moins une caméra (15), lequel est conçu pour générer une prise d'image (22) du dispositif de dépôt de tôle, laquelle est spatialement calibrée par rapport au système de coordonnées machine de la machine-outil à table plane (1),
une unité d'usinage (3),
un dispositif de levage (31), et
une unité de commande (11), dans laquelle l'unité de commande (11) est configurée pour exécuter un procédé selon l'une quelconque des revendications précédentes.

12. Machine-outil à table plane (1) selon la revendication 11, dans laquelle ladite au moins une caméra (15) est montée sur l'unité d'usinage (3) et/ou
dans laquelle le système de caméras est conçu pour une acquisition d'images en deux dimensions et/ou en trois dimensions.

13. Machine-outil à table plane (1) selon la revendication 11 ou 12, dans laquelle la machine-outil à table plane (1) est conçue comme une machine de découpe laser à table plane destinée à découper des pièces à usiner à partir d'une tôle de matériau (9) à l'aide d'un faisceau laser, et dans laquelle l'unité d'usinage (3) est conçue comme une unité de découpe laser.

14. Machine-outil à table plane (1) selon l'une quelconque des revendications 11 à 13, dans laquelle le dispositif de dépôt de tôle est conçu comme un changeur de palettes (5) doté d'une palette (7) ou comme une table de machine, et la prise d'image (22) montre en option une palette (7) avec la tôle de matériau (9) reposant sur celle-ci ou espacée verticalement.
